# EUROPEAN PATENT SPECIFICATION

(11) **EP 1 645 747 B1**
(45) Date of publication and mention of the grant of the patent: **04.05.2011**
(21) Application number: 05109166.8
(22) Date of filing: 04.10.2005
(51) Int. Cl.: F02K 9/86, F02K 9/26, F02K 9/10

(54) **Adjustable nozzle for a solid-propellant engine, and engine featuring such an adjustable nozzle**
Verstellbare Düse für einen Raketenmotor, und Raketenmotor mit einer solchen Düse
Tuyère ajustable pour moteur-fusée, et moteur-fusée avec une telle tuyère ajustable

(30) Priority: 05.10.2004 IT TO20040670
(43) Date of publication of application: 12.04.2006
(73) Proprietor: AVIO S.p.A., 10135 Torino (IT)
(72) Inventor: Mastronardi, Roberto, 00144 Roma (IT); Bellomi, Paolo, 00128 Roma (IT)
(74) Representative: Jorio, Paolo

(56) References cited:
- US-A- 3 182 447
- US-A- 3 914 935
- US-A- 3 943 708
- US-A- 4 478 040
- US-A- 5 435 128

## Description

The present invention relates to an adjustable nozzle for a solid-propellant engine.

As is known, a solid-propellant engine comprises an outer casing housing the solid propellant and defining a propellant combustion chamber; a propellant ignition device; and an exhaust nozzle for accelerating the combustion gases to produce the desired propulsive thrust.

To vary the thrust with time to achieve the desired thrust or mission profile, nozzles with a variable throat diameter are known to be used, wherein the throat diameter is varied by a mechanical adjusting device comprising a choke sleeve movable, inside the gas exhaust conduit, between a withdrawn rest position extending outside the conduit, and a forward work position extending at least partly inside the exhaust conduit to reduce the gas flow section. The sleeve is moved between the work and rest positions by an actuator assembly located outside the nozzle and connected mechanically to the sleeve through an opening formed through a lateral wall of the nozzle.

Though widely used, known nozzles of the type described above are unreliable and inefficient, despite being complex in design and expensive to produce.

This is mainly due to employing an external mechanical actuator, operation and mechanical connection of which to the sleeve through the opening are particularly awkward and often impaired by the high temperature - about 3700 kelvins - in the conduit, and by the fluid-dynamic stress transmitted directly by the exhaust gases.

Adjustable nozzles for a solid-propellant engines in which for varying a reference section comprise a block of propellant material are disclosed in US-A-3 182 447 and US-A-4 478 040.

It is an object of the present invention to provide an adjustable nozzle designed to provide a straightforward solution to the above problems, and which, at the same time, is cheap and easy to produce and highly reliable and efficient.

According to the present invention, there is provided an adjustable nozzle for a solid-propellant engine, as claimed in Claim 1.

In particular, the nozzle comprises a wearable, controlled-wear body that is a thermally wearable body conveniently comprising a block of propellant material. The wearable body is also preferably selectable from a number of bodies of different wear rates.

The present invention also relates to a solid-propellant engine.

According to the present invention, there is provided a solid-propellant engine comprising an outer casing, a first block of propellant material housed in said casing, and an adjustable nozzle; as claimed in claim 1.

A non-limiting embodiment of the invention will be described by way of example with reference to the accompanying drawings, in which:
Figure 1 shows a schematic, partly sectioned view of a solid-propellant engine featuring an adjustable nozzle in accordance with the teachings of the present invention;
Figure 2 shows a larger-scale view in perspective of a detail in Figure 1.

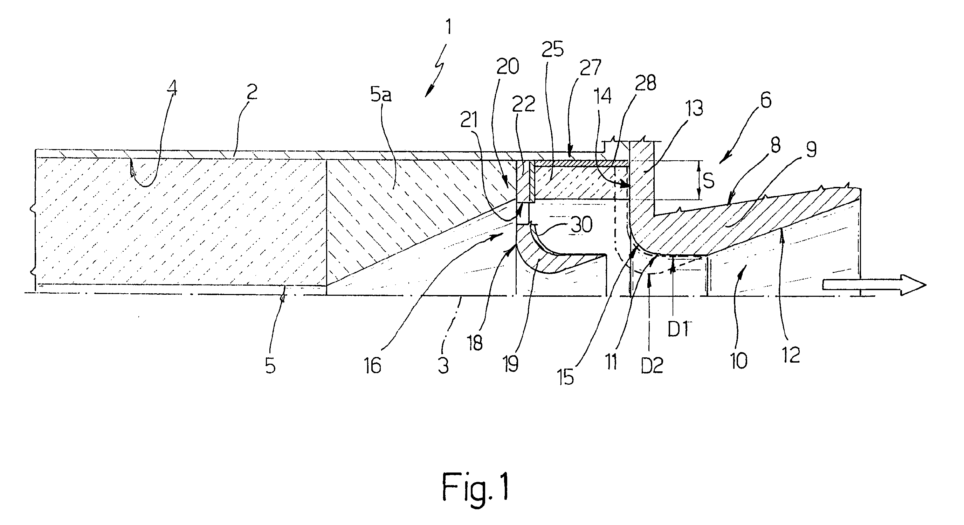

Number 1 in Figure 1 indicates as a whole a solid-propellant engine for a rocket (not shown). Engine 1 comprises an outer casing 2 having a respective axis 3 of symmetry and defining a chamber 4 for housing solid propellant 5. The engine also comprises an adjustable or variable-throat exhaust nozzle 6 fitted to an axial end of casing 2 to accelerate the combustion gases and produce the desired propulsive thrust.

With reference to Figure 1, nozzle 6 comprises a gas-conducting tubular body 8 connected in known manner to casing 2, and in turn comprising a tubular portion 9 extending coaxially with axis 3 and defining a gas exhaust conduit 10. Conduit 10 comprises a substantially cylindrical inlet portion 11 defining a reference flow section of a given diameter D1 normally referred to as the initial throat or reference diameter; and an outlet portion 12 diverging towards the free end of tubular body 8.

Tubular body 8 also comprises a radial connecting flange 13 connected in known manner to casing 2 and bounded by a flat radial annular surface 14 perpendicular to axis 3 and connected to inlet portion 11 by a convex surface 15.

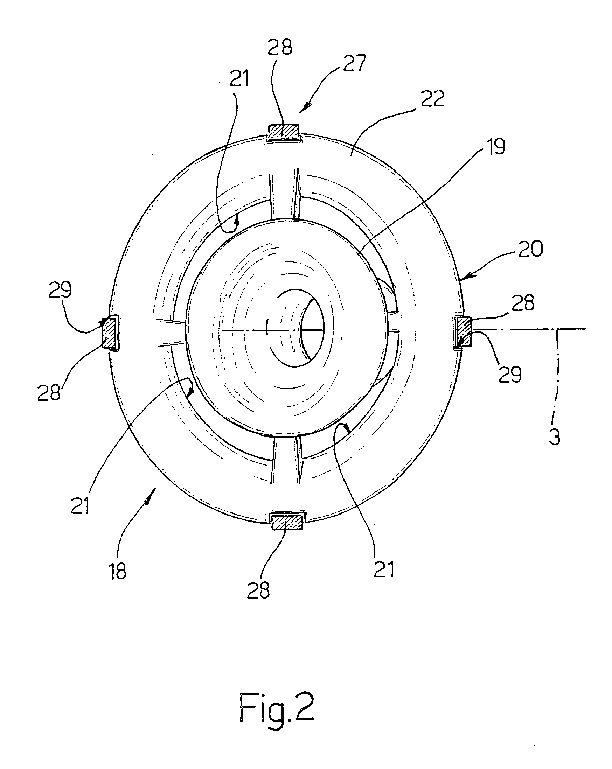

With reference to Figure 1, nozzle 6 also comprises a choke device 16 housed entirely inside casing 2, and in turn comprising a disk-shaped body 18 (Figure 2), which is conveniently made of graphitic material, is coaxial with axis 3, and comprises a central hollow tubular choke portion 19, which fits inside inlet portion 11 to reduce the gas flow section, and an outer radial flange 20 facing and detached from surface 14. Flange 20 has a number of intermediate circumferential gas-flow slits 21; and a peripheral annular portion 22 resting against one end of a tubular cartridge 5a of solid propellant.

When engine 1 is turned on, disk-shaped body 18 is maintained in a withdrawn rest position (shown by the continuous line in Figure 1) wherein portion 22 of flange 20 is forced into contact with the end of propellant cartridge 5a by a wearable, controlled-wear, cylindrical tubular body 25 coaxial with axis 3 and located upstream from conduit 10 in the gas outflow direction. More specifically, body 25 surrounds portion 19 and extends between surface 14 and flange 20, which is thus gripped between body 25 and cartridge 5a and so clamped in an axially-fixed position with respect to body 6. Body 25 is conveniently made of the same propellant material as cartridge 5a. Alternatively, body 25 is selectable from a number of tubular bodies of different thickness S (Figure 1) to vary the instant in which nozzle 6 is choked.

Once the engine is turned on, propellant 5, 5a burns gradually to generate a quantity of gases, which flow through slits 21 and choke portion 19 to nozzle 6, and then along conduit 10. Disk-shaped body 18 being clamped in the rest position, nozzle 6 operates with throat diameter D1. Once the engine is turned on, body 25 also begins to gradually wear down radially at a rate depending on the material and geometry of the body, and for a time depending on the material used and thickness S. Once body 25 is completely worn down, the dynamic thrust generated by the gases pushes disk-shaped body 18 towards body 8 into a forward work position, in which portion 19 is inserted inside portion 11, thus reducing the flow section and the throat of the nozzle to a diameter D2 smaller than D1, as shown by the dash line in Figure 1.

Disk-shaped body 18 is guided from the withdrawn rest position to the forward work position by a guide device 27 comprising a number of fixed, straight guide rods 28, which are connected integrally to casing 2 or body 8, are parallel to axis 3, and are spaced along the outer periphery of disk-shaped body 18. Each rod 28 slides inside a respective radial recess 29 (Figure 2) formed on peripheral portion 22 of flange 20, to connect disk-shaped body 18 to casing 2 in axially-sliding, angularly-fixed manner.

To cushion the impact of disk-shaped body 18 against body 8, disk-shaped body 18 is provided with a layer 30 (Figure 1) of damping material, which is deformed elastically between disk-shaped body 18 and surface 14 when disk-shaped body 18 is in the forward work position.

As will be clear from the foregoing description, variable-throat nozzle 6 is highly reliable and efficient, while at the same time being cheap and easy to produce. Unlike known solutions, in fact, as opposed to an external actuator, the position of choke portion 19 is controlled by a straightforward inner retaining body, which wears down gradually from the instant the engine is turned on. Control of the instant in which the nozzle is choked, i.e. in which the throat diameter is reduced, is equally straightforward; which instant, as stated, is determined simply by appropriately selecting the type of material and/or the geometrical/dimensional characteristics of the body.

Guide device 27 ensures disk-shaped body 18 moves smoothly towards body 8 with no jamming, which would result in an unpredictable, totally unacceptable change in the instant in which the throat diameter of the nozzle is reduced.

Finally, layer 30 of damping material ensures gradual engagement with no shock or vibration.

As will be clear from the foregoing description, controlling the position of disk-shaped choke body 18 using a straightforward wearable body housed inside a chamber communicating directly with the propellant combustion chamber greatly simplifies manufacture of nozzle 6 and makes it more reliable, by eliminating the need for openings in the lateral wall of the nozzle, and also for seals necessarily required for the openings in known solutions. With respect to known solutions, nozzle 6 is also much easier to produce and much more reliable by featuring no mechanical actuators requiring protection against thermal and mechanical stress induced by combustion of the propellant.

Clearly, changes may be made to nozzle 6 as described herein without, however, departing from the protective scope defined in the accompanying Claims. In particular, the disk-shaped body may be formed differently from the one described by way of example, and using materials other than those described; and changes may also be made to the geometry and location of the retaining body of wearable material.

Finally, the nozzle need not have a layer 30 of damping material; and layer 30 may be carried by body 8.

## Claims

1. An adjustable nozzle (6) for a solid-propellant engine (1), the nozzle (6) comprising a conducting body (8) defining a conduit (10) for conducting the gases produced by combustion of a solid propellant and having a reference section (11); and choke means (16) for varying said reference section (11) and comprising a choke body (18) movable with respect to said conducting body (8); **characterized in that** said choke means (16) also comprise a wearable, controlled-wear body (25) interposed between said conducting body (8) and said choke body (18) for maintaining the choke body (18) in a rest condition, and allowing movement of the choke body (18) into at least one choke position choking said reference section (11) after a predetermined time and wherein said wearable, controlled-wear body (25) comprises a block (25) of propellant material.

2. A nozzle as claimed in Claim 1, **characterized in that** said wearable, controlled-wear body (25) is a thermally wearable body.

3. A nozzle as claimed in one of Claims 1 or 2, **characterized in that** said wearable, controlled-wear body is selectable from a number of bodies of different wear rates.

4. A nozzle as claimed in any one of the foregoing Claims, **characterized in that** said choke body rests directly on said wearable, controlled-wear body (25).

5. A nozzle as claimed in any one of the foregoing Claims, **characterized in that** said wearable, controlled-wear body (25) is located upstream from said conduit (10) in the flow direction of said gases.

6. A nozzle as claimed in any one of Claims 1 to 5, **characterized in that** said wearable, controlled-wear body (25) is an annular body at least partly surrounding said choke body (18).

7. A nozzle as claimed in any one of the foregoing Claims, **characterized in that** said choke body (18) comprises a radial flange (20); said wearable, controlled-wear body (25) acting on a peripheral portion (22) of said radial flange (20) to retain said choke body (18) in said rest condition.

8. A nozzle as claimed in one of the foregoing Claims, **characterized by** comprising connecting means (27) for connecting said wearable, controlled-wear body (25) to said conducting body (8) in sliding manner in a direction (3) parallel to the outflow direction of said gases and in an angularly-fixed position.

9. A nozzle as claimed in Claim 8, **characterized in that** said connecting means comprise guide bars (28) fixed with respect to said conducting body (8) and engaging respective seats (29) in said radial flange (20).

10. A nozzle as claimed in any one of the foregoing Claims, **characterized by** comprising damping means (30) interposed between said choke body (18) and said conducting body (8).

11. A nozzle as claimed in Claim 10 **characterized in that** said damping means are carried by said choke body (18).

12. A solid-propellant engine (1) comprising an outer casing (2), a first block of propellant material (5a) housed in said casing (2), and an adjustable nozzle (6) ; as defined in claim 1.

13. engine as claimed in claim 12, **characterized in that** said first block of propellant material, said wearable, controlled-wear body (25) and said choke body (18) are housed entirely inside said casing (2) when the choke body is in said rest condition.

14. An engine as claimed in Claim 13, **characterized in that** said choke body (18) is gripped between said first block of propellant material (5a) and said wearable controlled-wear body (25).

## Patentansprüche

1. Verstellbare Düse (6) für einen Raketenmotor (1), wobei die Düse (6) einen Leitkörper (8) umfasst, der eine Leitung (10) zum Leiten der Gase, die durch Verbrennung eines Festtreibstoffs erzeugt sind, umfasst und einen Bezugsabschnitt (11) aufweist; und Drosselmittel (16) zum Verändern des Bezugsabschnitts (11) und einen Drosselkörper (18) umfassend, der bezüglich des Leitkörpers (8) verschiebbar ist; **dadurch gekennzeichnet, dass** das Drosselmittel (16) außerdem einen verschleißbaren Körper (25) mit gesteuertem Verschleiß umfasst, der zwischen dem Leitkörper (8) und dem Drosselkörper (18) eingeschoben ist, zum Erhalten des Drosselkörpers (18) in einem Ruhezustand und zum Ermöglichen einer Bewegung des Drosselkörpers (18) in zumindest eine Drosselposition, die den Bezugsabschnitt (11) nach einer vorgegebenen Zeit drosselt, und wobei der verschleißbare Körper (25) mit gesteuertem Verschleiß einen Block (25) aus Treibstoffmaterial umfasst.

2. Düse nach Anspruch 1, **dadurch gekennzeichnet, dass** der verschleißbare Körper (25) mit gesteuertem Verschleiß ein thermisch verschleißbarer Körper ist.

3. Düse nach einem der Ansprüche 1 oder 2, **dadurch gekennzeichnet, dass** der verschleißbare Körper (25) mit gesteuertem Verschleiß aus einer Anzahl von Körpern mit unterschiedlichen Verschleißraten auswählbar ist.

4. Düse nach einem der vorhergehenden Ansprüche, **dadurch gekennzeichnet, dass** der Drosselkörper direkt auf dem verschleißbaren Körper (25) mit gesteuertem Verschleiß ruht.

5. Düse nach einem der vorhergehenden Ansprüche, **dadurch gekennzeichnet, dass** der verschleißbare Körper (25) mit gesteuertem Verschleiß der Leitung (10) vorgeschaltet in der Strömungsrichtung des Gases angeordnet ist.

6. Düse nach einem der Ansprüche 1 bis 5, **dadurch gekennzeichnet, dass** der verschleißbare Körper (25) mit gesteuertem Verschleiß ein ringförmiger Körper ist, der den Drosselkörper (18) zumindest teilweise umgibt.

7. Düse nach einem der vorhergehenden Ansprüche, **dadurch gekennzeichnet, dass** der Drosselkörper (18) einen radialen Flansch (20) umfasst; wobei der verschleißbare Körper (25) mit gesteuertem Verschleiß auf einen Umfangsabschnitt (22) des radialen Flanschs (20) zum Halten des Drosselkörpers (18) in dem Ruhezustand einwirkt.

8. Düse nach einem der vorhergehenden Ansprüche, **gekennzeichnet durch** Verbindungsmittel (27) zum gleitbaren Verbinden des verschleißbaren Körpers (25) mit gesteuertem Verschleiß mit dem Leitkörper (8) in einer Richtung (3) parallel zur Ausstromrichtung der Gase und in einer winklig festgelegten Position.

9. Düse nach Anspruch 8, **dadurch gekennzeichnet, dass** die Verbindungsmittel Führungsstangen (28) umfassen, die bezüglich des Leitkörpers (8) befestigt sind und jeweilige Sitze (29) in dem radialen Flansch (20) in Eingriff nehmen.

10. Düse nach einem der vorhergehenden Ansprüche, **gekennzeichnet durch** Dämpfungsmittel (30), die zwischen dem Drosselkörper (18) und dem Leitkörper (8) eingeschoben sind.

11. Düse nach Anspruch 10, **dadurch gekennzeichnet, dass** die Dämpfungsmittel durch den Drosselkörper (18) getragen sind.

12. Raketenmotor (1), umfassend ein Außengehäuse (2), einen ersten Block aus Treibstoffmaterial (5a), der in dem Gehäuse (2) aufgenommen ist, und eine verstellbare Düse (6) wie in Anspruch 1 definiert.

13. Motor nach Anspruch 12, **dadurch gekennzeichnet, dass** der erste Block aus Treibstoffmaterial, der verschleißbare Körper (25) mit gesteuertem Verschleiß und der Drosselkörper (18) vollständig in dem Gehäuse (2) aufgenommen sind, wenn sich der Drosselkörper in dem Ruhezustand befindet.

14. Motor nach Anspruch 13, **dadurch gekennzeichnet, dass** der Drosselkörper (18) zwischen dem ersten Block aus Treibstoffmaterial (5a) und dem verschleißbaren Körper (25) mit gesteuertem Verschleiß ergriffen ist.

## Revendications

1. Tuyère réglable (6) dévolue à un moteur-fusée (1), ladite tuyère (6) comprenant un corps de canalisation (8) définissant un conduit (10) conçu pour canaliser les gaz produits par combustion d'un propergol solide, et présentant une section de référence (11) ; et des moyens d'étranglement (16) destinés à modifier ladite section de référence (11) et comprenant un corps d'étranglement (18) mobile vis-à-vis dudit corps de canalisation (8) ; **caractérisée par le fait que** lesdits moyens d'étranglement (16) comprennent également un corps d'usure (25), à usure commandée, qui est interposé entre ledit corps de canalisation (8) et ledit corps d'étranglement (18) pour maintenir ledit corps d'étranglement (18) dans une condition de repos, et pour permettre un mouvement dudit corps d'étranglement (18) vers au moins une position d'étranglement étranglant ladite section de référence (11) après un temps prédéterminé, et sachant que ledit corps d'usure (25), à usure commandée, comprend un bloc de propergol (25).

2. Tuyère selon la revendication 1, **caractérisée par le fait que** ledit corps d'usure (25), à usure commandée, est un corps pouvant être usé thermiquement.

3. Tuyère selon l'une des revendications 1 ou 2, **caractérisée par le fait que** ledit corps d'usure, à usure commandée, peut être choisi parmi un certain nombre de corps présentant des taux d'usure différents.

4. Tuyère selon l'une quelconque des revendications précédentes, **caractérisée par le fait que** ledit corps d'étranglement repose directement sur ledit corps d'usure (25), à usure commandée.

5. Tuyère selon l'une quelconque des revendications précédentes, **caractérisée par le fait que** ledit corps d'usure (25), à usure commandée, est situé en amont dudit conduit (10) dans la direction d'écoulement desdits gaz.

6. Tuyère selon l'une quelconque des revendications 1 à 5, **caractérisée par le fait que** ledit corps d'usure (25), à usure commandée, est un corps annulaire entourant au moins partiellement ledit corps d'étranglement (18).

7. Tuyère selon l'une quelconque des revendications précédentes, **caractérisée par le fait que** ledit corps d'étranglement (18) comprend une collerette radiale (20) ; ledit corps d'usure (25), à usure commandée, agissant sur une région périphérique (22) de ladite collerette radiale (20) pour maintenir ledit corps d'étranglement (18) dans ladite condition de repos.

8. Tuyère selon l'une quelconque des revendications précédentes, **caractérisée par le fait qu'**elle comprend des moyens de liaison (27) conçus pour relier ledit corps d'usure (25) à usure commandée audit corps de canalisation (8), de manière coulissante dans une direction (3) parallèle à la direction de sortie desdits gaz, et dans une position arrêtée angulairement.

9. Tuyère selon la revendication 8, **caractérisée par le fait que** lesdits moyens de liaison comprennent des barrettes de guidage (28) verrouillées à demeure par rapport audit corps de canalisation (8) et venant coopérer avec des logements respectifs (29), pratiqués dans ladite collerette radiale (20).

10. Tuyère selon l'une quelconque des revendications précédentes, **caractérisée par le fait qu'**elle comprend des moyens d'amortissement (30), interposés entre ledit corps d'étranglement (18) et ledit corps de canalisation (8).

11. Tuyère selon la revendication 10, **caractérisée par le fait que** lesdits moyens d'amortissement sont portés par ledit corps d'étranglement (18).

12. Moteur-fusée (1) comprenant un carter extérieur (2), un premier bloc de propergol (5a) logé dans ledit carter (2), et une tuyère réglable (6) telle que définie dans la revendication 1.

13. Moteur selon la revendication 12, **caractérisé par le fait que** ledit premier bloc de propergol, ledit corps d'usure (25) à usure commandée, et ledit corps d'étranglement (18), sont intégrés en totalité à l'intérieur dudit carter (2) lorsque ledit corps d'étranglement se trouve dans ladite condition de repos.

14. Moteur selon la revendication 13, **caractérisé par le fait que** ledit corps d'étranglement (18) est enserré entre ledit premier bloc de propergol (5a) et ledit corps d'usure (25), à usure commandée.
